# EUROPEAN PATENT APPLICATION

(11) **EP 4 841 902 A1**
(43) Date of publication of application: **18.11.2026**
(21) Application number: 25738891.8
(22) Date of filing: 06.01.2025
(51) Int. Cl.: H04B 7/0417, H04B 7/024, H04B 7/06, H04L 27/26, H04W 84/12

(54) **METHOD AND DEVICE FOR NDP SOUNDING IN WIRELESS LAN SYSTEM**

(30) Priority: 08.01.2024 KR 20240002988
(71) Applicant: LG Electronics Inc., Yeongdeungpo-gu Seoul 07336 (KR)
(72) Inventor: CHUN, Jinyoung, Seoul 06772 (KR); CHOI, Jinsoo, Seoul 06772 (KR); LIM, Dongguk, Seoul 06772 (KR); PARK, Eunsung, Seoul 06772 (KR)
(74) Representative: Mooser, Sebastian Thomas
(86) International application number: PCT/KR2025/000238
(87) International publication number: WO 2025/150817

(57) **Abstract**

Disclosed are a method and device for NDP sounding in a wireless LAN system. The method according to an embodiment of the present disclosure may comprise the steps in which: an STA receives an NDP announcement frame from a first AP; and the STA transmits a frame including channel state information to the first AP.

## Description

### [Technical Field]

The present disclosure relates to a method and an apparatus for sounding a null data PPDU (physical protocol data unit) (NDP: null data PPUD) in a wireless local area network (WLAN) system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide an NDP sounding method and apparatus.

An additional technical object of the present disclosure is to provide an NDP sounding method and apparatus for obtaining channel information for an overlapping basic service set (OBSS) STA in a wireless LAN system that supports multi-AP (multi-access point) operation.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may include: receiving, by a station (STA), a null data physical protocol data unit (PPDU) (NDP) announcement frame from a first access point (AP); and transmitting, by the STA, a frame including channel state information to the first AP. The NDP announcement frame may include a plurality of STA Info fields and a variant of the NDP announcement frame may be identified by first one or more STA Info fields among the plurality of STA Info fields.

A method according to an additional aspect of the present disclosure may include: transmitting, by a first access point (AP), a null data physical protocol data unit (PPDU) (NDP) announcement frame to a station (STA); and receiving, by the first AP, a frame including channel state information from the STA. The NDP announcement frame may include a plurality of STA Info fields and a variant of the NDP announcement frame may be identified by first one or more STA Info fields among the plurality of STA Info fields.

### [Technical Effects]

According to an embodiment of the present disclosure, channel information for BSS STAs as well as channel information for OBSS STAs can be obtained.

Furthermore, according to the present disclosure, by obtaining channel information for OBSS STAs, multi-AP (multi-access point) operation can be smoothly supported.

Furthermore, according to the present disclosure, frequency resources can be utilized efficiently as reuse of frequency resources is made possible through a spatial reuse technique in which multiple BSSs cooperate.

Effects achievable by the present disclosure are not limited to the above-described effects, and other effects which are not described herein may be clearly understood by those skilled in the pertinent art from the following description.

### [Brief Description of the Drawings]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates an exemplary format of an NDP announcement frame to which the present disclosure may be applied.
FIG. 9 illustrates an NDPA frame for indicating OBSS sounding according to one embodiment of the present disclosure.
FIG. 10 illustrates an NDPA frame for indicating OBSS sounding according to one embodiment of the present disclosure.
FIG. 11 illustrates an STA information field of an NDPA frame for indicating OBSS sounding according to one embodiment of the present disclosure.
FIG. 12 illustrates an STA information field of an NDPA frame for indicating OBSS sounding according to one embodiment of the present disclosure.
FIG. 13 is a diagram illustrating the operation of an STA for an NDP sounding method according to one embodiment of the present disclosure.
FIG. 14 is a diagram illustrating the operation of an AP for an NDP sounding method according to one embodiment of the present disclosure.

### [Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

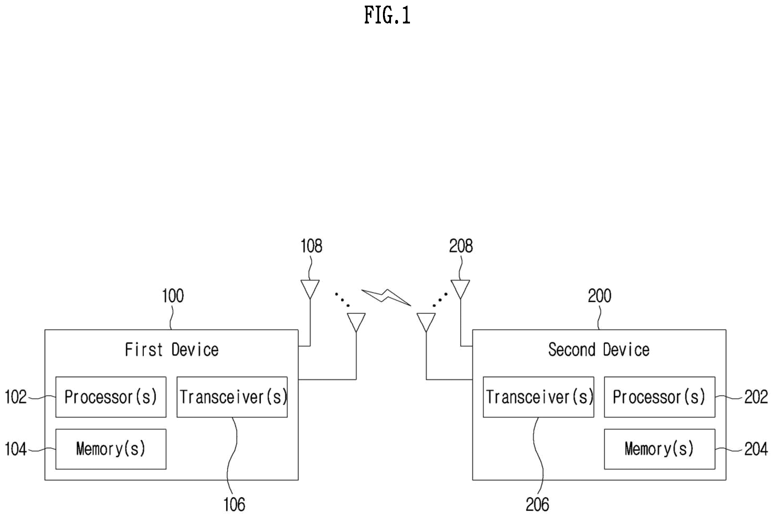

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

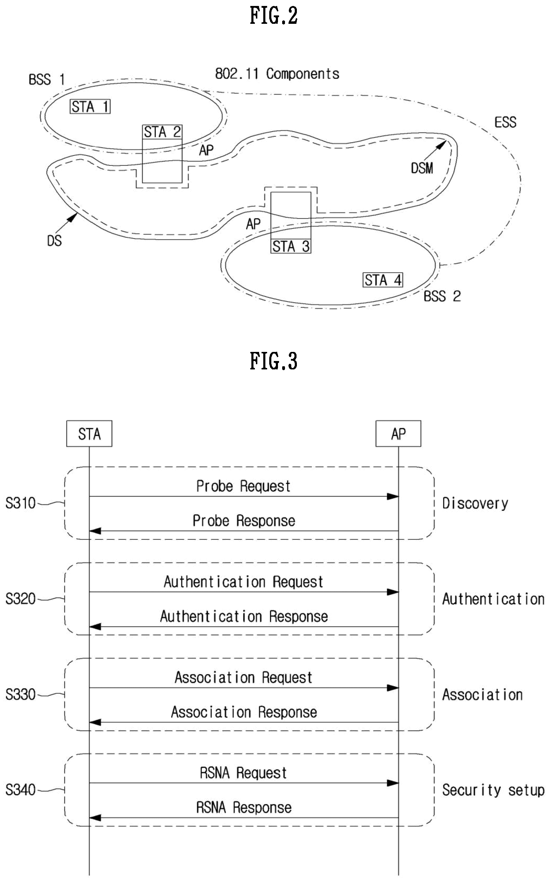

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

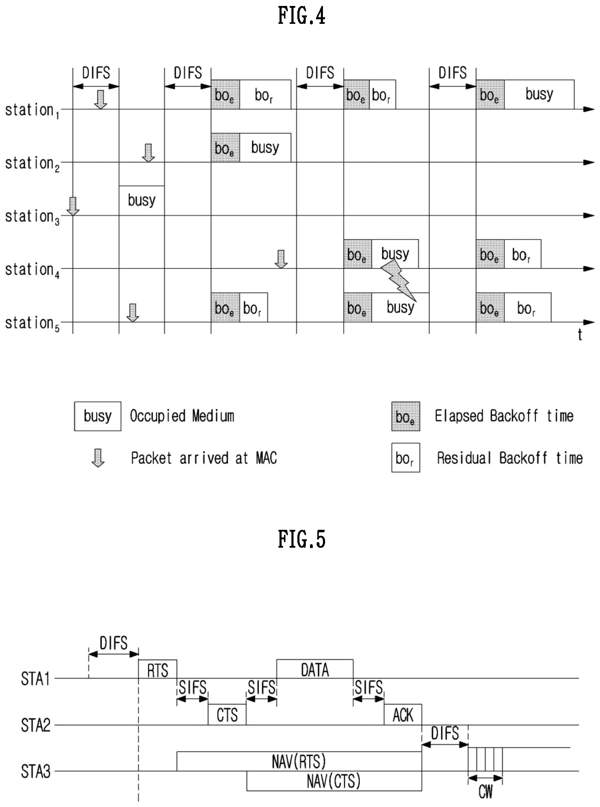

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

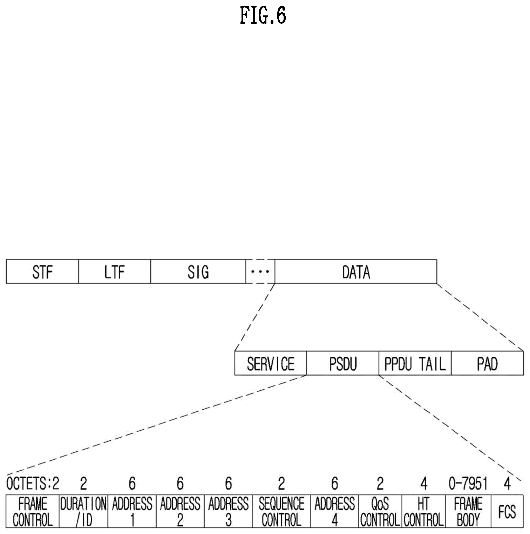

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

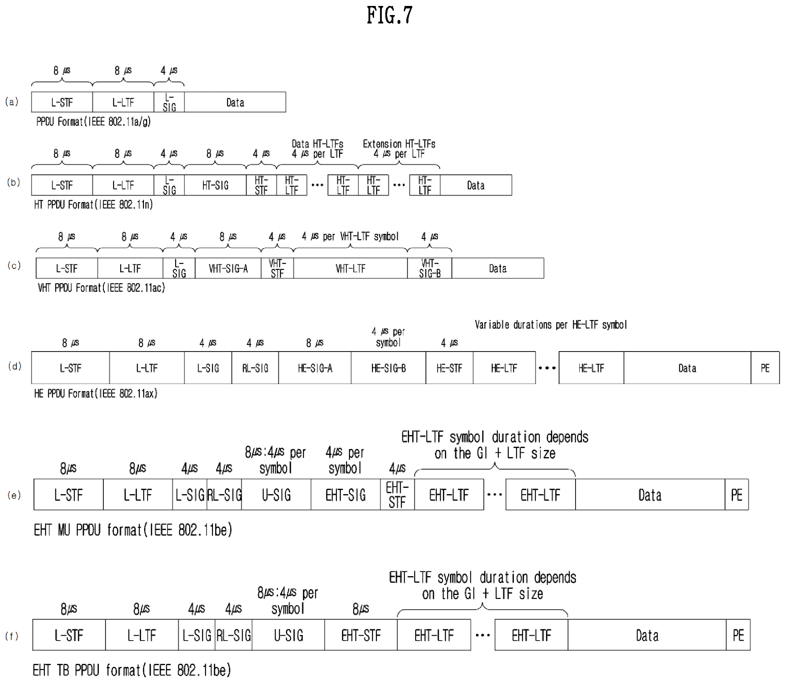

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Null data physical protocol data unit (PPDU) (NDP) announcement (NDPA) frame

In a wireless local area network (WLAN) system, a sounding procedure/protocol is used to determine channel state information. A beamformer STA requesting channel state information may transmit a training signal to beamformee STA(s). The beamformee STA may measure a channel using the training signal (e.g., a sounding NDP) and feedback an estimate for a channel state to the beamformer STA. The beamformer STA may derive a steering matrix or a beamforming matrix using the fed-back estimate.

A beamforming STA may feedback the estimate for the channel state to the beamformer STA through a compressed beamforming/channel quality indication (CQI) report frame. Information to be fed back may include single user (SU) feedback, multi-user (MU) feedback, CQI feedback, and the like.

The beamformer STA may transmit an NDP announcement and an NDP to the beamformee(s), and receive feedback information from the beamformee STA(s). Additionally or alternatively, the beamformer STA may transmit the NDP announcement and the NDP to the beamformee(s), and transmit a beamforming report poll (BFRP) or a BFRP trigger to the beamformee(s), thereby receiving the feedback information from the beamformee(s).

An NDP announcement (NDPA) frame may have a plurality of types/variants. For example, the NDP announcement frame may be configured in various formats such as a VHT NDP announcement frame, an HE NDP announcement frame, an EHT NDP announcement frame, and the like. These formats may be distinguished by an NDP announcement variant subfield within a sounding dialog token field.

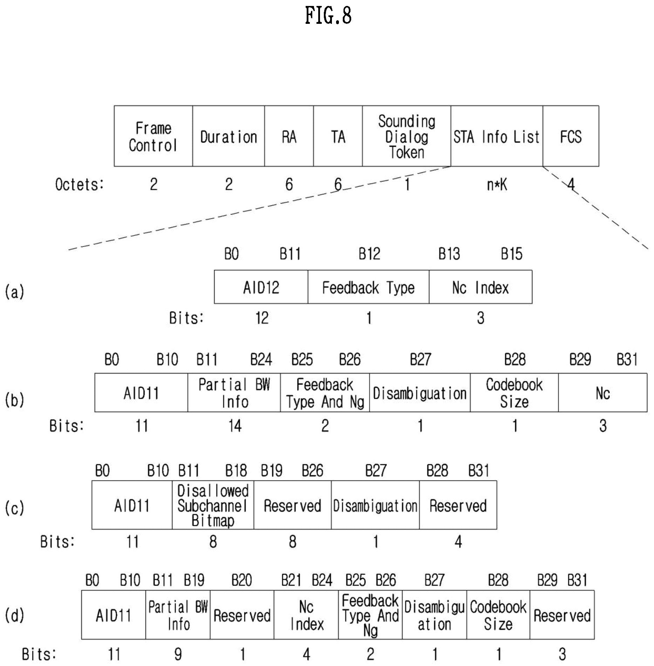

FIG. 8 illustrates an exemplary format of an NDP announcement frame to which the present disclosure may be applied.

An NDP announcement frame may include one or more STA info fields. When the NDP announcement frame includes only one STA info field, a receiver address (RA) field may be set to an address of an STA that can provide feedback. When the NDP announcement frame includes a plurality of STA info fields, the RA field may be set to a broadcast address.

A transmitter address (TA) field may be set to an address of an STA transmitting the NDP announcement frame, or may be set to a bandwidth signaling TA of the STA transmitting the NDP announcement frame. For example, in a non-HT or non-HT duplicate format, when a scrambling sequence (or a scrambling sequence and service field) includes a parameter for a channel bandwidth, the TA field may be set to the bandwidth signaling TA.

Among 8 bits (B0-B7) of a sounding dialog token field, first 2 bits (B0 and B1) may be used to indicate a type/variant of the NDP announcement frame. For example, for VHT or HE, B0 has a value of 0, and if a value of B1 is 0, it may indicate a VHT NDP announcement frame, and if the value of B1 is 1, it may indicate an HE NDP announcement frame. For example, an EHT NDP announcement frame may correspond to a case where both values of B0 and B1 are set to 1. If the B0 value is 1 and the B1 value is 0, it may correspond to a ranging NDP announcement frame.

In case of a VHT STA, since the first 2 bits (B0 and B1) of the sounding dialog token field are defined as reserved, the VHT STA may recognize a sounding dialog token number field of bits B2-B7 regardless of the values of B0 and B1.

For a VHT STA, the first 2 bits (B0 and B1) of the sounding dialog token field are defined as reserved. Accordingly, the VHT STA may recognize the sounding dialog token number field of bits B2-B7 regardless of the values of B0 and B1.

For an HE STA, a first 1 bit (B0) of the sounding dialog token field is defined as reserved, and it is defined that if a value of a second bit (B1) is 0, it indicates a VHT NDP announcement frame, and if the value of B1 is 1, it indicates an HE NDP announcement frame. Accordingly, the HE STA may recognize the sounding dialog token number field of bits B2-B7 when the value of B1 is 1, regardless of the value of B0.

A sounding dialog token number subfield (bit positions B2-B7) may include a value for identifying the NDP announcement frame, which is selected by a beamformer.

The NDP announcement frame may include n (n is an integer equal to or greater than 1) STA info fields. One STA info field has a size of K octets, and K=2 in a VHT NDP announcement frame, and K=4 in an HE NDP announcement frame or an EHT NDP announcement frame.

As in the example of FIG. 8(a), the STA info field of the VHT NDP announcement frame may include AID12, feedback type, and Nc index subfields.

The AID12 subfield includes 12 least significant bits (LSBs) among AIDs of STAs expected to process a subsequent NDP and prepare sounding feedback.

The feedback type subfield indicates a type of required feedback, and corresponds to SU when its value is 0, and to MU when its value is 1.

The Nc index subfield indicates a value (i.e., Nc-1) obtained by subtracting 1 from the number of columns (i.e., Nc) in a compressed beamforming feedback matrix when the feedback type is MU. In case of SU, the Nc index field is reserved.

The example of FIG. 8(b) shows a format of the STA info field of the HE NDP announcement frame when a value of the AID11 field is not a specific value (e.g., 2047).

The value of the AID11 subfield other than the specific value (e.g., 2047) includes 11 LSB among AIDs of STAs expected to process a subsequent NDP and prepare sounding feedback.

A partial bandwidth information (partial BW info) subfield may include an RU start index of 7 bits (B0-B6) and an RU end index of 7 bits (B7-B13). The RU index may be determined according to a bandwidth of the NDP announcement frame, and its unit may be a 26-tone RU. For example, to indicate a 26-tone RU index X, a value of the start/end RU index subfield may be set to X-1.

A feedback type and Ng subfield, in combination with a codebook size subfield, may indicate whether SU/MU/CQI feedback is requested, Ng=4 or 16, and a quantization resolution for trigger-based (TB) sounding. For non-TB sounding, the feedback type and Ng subfield and the codebook size subfield may indicate SU or CQI.

A disambiguation subfield is set to 1, thereby helping a non-HE STA (e.g., a VHT STA) not to misunderstand the corresponding field as an AID field.

An Nc subfield is set to a value of Nc-1. When the feedback type is SU or MU, Nc corresponds to the number of columns in the compressed beamforming feedback matrix, and when the feedback type is CQI, Nc may correspond to the number of space-time streams (STS). In case of an NDP announcement frame having an AID11 subfield value other than 2047 and individually addressed to a single STA, the Nc subfield may be reserved.

The example of FIG. 8(c) shows a format of the STA info field of the HE NDP announcement frame when the value of the AID11 field is a specific value (e.g., 2047).

A disallowed subchannel bitmap subfield indicates 20MHz subchannel(s) and 242-tone RU(s) present in sounding NDPs announced by the NDP announcement frame, and 242-tone RU(s) to be included in requested sounding feedback. A lowest numbered bit of the disallowed subchannel bitmap corresponds to a 20MHz subchannel located at a lowest frequency among all 20MHz subchannels within a BSS bandwidth. Each subsequent bit in the bitmap corresponds to a next higher 20MHz subchannel. A bit set to 1 in the bitmap may indicate that energy does not exist in a sounding NDP associated with the NDP announcement frame. For each disallowed 20MHz subchannel, a 242-tone RU aligned closest in frequency with the corresponding 20MHz subchannel may not be allowed for a PPDU using a specific tone plan. STA(s) addressed by the NDP announcement frame do not include a tone from the disallowed 242-tone RU when determining an average SNR of STS 1 to Nc in generating the requested sounding feedback. When the 20MHz subchannel and its corresponding 242-tone RU are allowed, a corresponding bit in the bitmap is set to 0.

The example of FIG. 8(d) shows a format of the STA info field of the EHT NDP announcement frame.

An AID11 subfield may be defined as shown in Table 1. Basically, the AID11 subfield includes an identifier of an STA expected to process a subsequent NDP and prepare sounding feedback.

**[Table 1]**

| Value of AID subfield | Description | NDP announcement frame type/variant applicability |
|---|---|---|
| 0 | - The STA info field is addressed to an associated AP or a mesh AP or an IBSS STA. | Applicable to all variants. |
| 1-2007 | When the NDP announcement frame is not a ranging variant, the STA info field is addressed to an associated STA having an AID equal to a value of the AID11 subfield. | Applicable to all variants. |
| | - When the NDP announcement frame is the ranging variant, the STA info field is addressed to an unassociated STA or an associated STA having an RSID/AID equal to a value of the RSID11/AID11 subfield. | |
| | - A value of 2007 is reserved for the EHT variant. | |
| 2008-2042 | Reserved. | Not applicable to all variants. |
| 2043 | - When the NDP announcement frame is the ranging variant, the STA info field includes a sequence authentication code. | Applicable only to the ranging variant. |
| | - Otherwise, the AID11 value is reserved. | |
| 2044 | - When the NDP announcement frame is the ranging variant, the STA info field includes a partial timing synchronization function (TSF). | Applicable only to the ranging variant. |
| | - Otherwise, the AID11 value is reserved. | |
| 2045 | - When the NDP announcement frame is the ranging variant, the STA info field includes ranging measurement parameters. | Applicable only to the ranging variant. |
| | - Otherwise, the AID11 value is reserved. | |
| 2046 | Reserved. | Not applicable to all variants. |
| 2047 | - When the NDP announcement frame is an HE variant, the STA info field includes a disallowed subchannel bitmap. | Applicable only to the HE variant. |
| | - Otherwise, the AID11 value is reserved. | |

A partial bandwidth (partial BW) subfield may include a 1-bit (B0) resolution subfield and an 8-bit (B1-B8) feedback bitmap. The resolution subfield indicates a resolution bandwidth (e.g., 20MHz or 40MHz) for each bit of the feedback bitmap subfield. The feedback bitmap subfield may indicate a request for each resolution bandwidth from a lower frequency to a higher frequency, and a first bit (B1) of the bitmap corresponds to a lowest resolution bandwidth. Each bit of the feedback bitmap is set to 1 when feedback for a corresponding resolution bandwidth is requested.

When a bandwidth of an EHT NDP announcement frame is less than 320MHz, a value of the resolution bit (B0) may be set to 0 to indicate a resolution of 20MHz.

When the bandwidth of the EHT NDP announcement frame is 20MHz, B1 is set to 1 to indicate that feedback for a 242-tone RU is requested, and B2-B8 may be reserved and set to 0.

When the bandwidth of the EHT NDP announcement frame is 40MHz, B1 and B2 indicate that feedback in each of two 242-tone RUs from a lower frequency to a higher frequency is requested, and B3-B8 may be reserved and set to 0.

When a bandwidth of a PPDU carrying the EHT NDP announcement frame is 80MHz, B0 may be set to 0 to indicate a resolution of 20MHz. When all of B1-B4 are set to 1, it may indicate that feedback for a 996-tone RU is requested. Otherwise, B1-B4 indicate that feedback in each of four 242-tone RUs from a lower frequency to a higher frequency is requested, and B5-B8 may be reserved and set to 0.

When the bandwidth of the PPDU carrying the EHT NDP announcement frame is 160MHz, B0 may be set to 0 to indicate a resolution of 20MHz. When all of B1-B4 are set to 1, it may indicate that feedback for a lower 996-tone RU is requested, and otherwise, B1-B4 may indicate that feedback in each of four 242-tone RUs from a lower frequency to a higher frequency in a lower 80MHz is requested. When all of B5-B8 are set to 1, it may indicate that feedback for an upper 996-tone RU is requested, and otherwise, B5-B8 may indicate that feedback in each of four 242-tone RUs from a lower frequency to a higher frequency in an upper 80MHz is requested.

When the bandwidth of the PPDU carrying the EHT NDP announcement frame is 320MHz, B0 may be set to 1 to indicate a resolution of 40MHz. When both B1 and B2 are set to 1, it may indicate that feedback for a first 996-tone RU is requested, and otherwise, B1 and B2 may indicate that feedback in each of two 484-tone RUs from a lower frequency to a higher frequency in a first 80MHz is requested. When both B3 and B4 are set to 1, it may indicate that feedback for a second 996-tone RU is requested, and otherwise, B3 and B4 may indicate that feedback in each of two 484-tone RUs from a lower frequency to a higher frequency in a second 80MHz is requested. When both B5 and B6 are set to 1, it may indicate that feedback for a third 996-tone RU is requested, and otherwise, B5 and B6 may indicate that feedback in each of two 484-tone RUs from a lower frequency to a higher frequency in a third 80MHz is requested. When both B7 and B8 are set to 1, it may indicate that feedback for a fourth 996-tone RU is requested, and otherwise, B7 and B8 may indicate that feedback in each of two 484-tone RUs from a lower frequency to a higher frequency in a fourth 80MHz is requested. A feedback tone set for each 484-tone RU may comprise feedback tone sets of two 242-tone RUs overlapping with the 484-tone RU.

The partial bandwidth subfield may have a value as shown in an example of Table 2 according to a related configuration.

**[Table 2]**

| **Feedback RU or MRU size** | **Bandwidth of the PPDU carrying the EHT NDP Announcement frame (MHz)** | **Partial BW Info subfield values in binary format (B0 B1 B2 B3 B4 B5 B6 B7 B8)** | **Operating channel width of the EHT beamformee (MHz)** |
|---|---|---|---|
| 242 | 20 | 010000000 | 20, 40, 80, 160, 320 |
| | 40 | 010000000, 001000000 | |
| | 80 | 010000000, 001000000, 000100000, 000010000 | 20, 80, 160, 320 |
| | 160 | 010006000, 001000000, 000100000, 000010000, 000001000, 000000100, 0060000010, 000000001 | |
| 484 | 40 | 011000000 | 40, 80, 160, 320 |
| | 80 | 011000000, 000110000 | 80, 160, 320 |
| | 160 | 011000000, 000110000, 000001100, 000000011 | |
| | 320 | 110000000, 101000000, 100100000, 100010000, 100001000, 100000100, 100000010, 100000001 | |
| 484+242 | 80 | 011100000, 011010000, 010110000, 001110000 | |
| | 160 | 011100000, 011010000, 010110000, 001110000, 000001110, 000001101, 000001011, 000000111 | |
| 996 | 80 | 011110000 | |
| | 160 | 011110000, 000001111 | |
| | 320 | 111000000, 100110000, 100001100, 100000011 | |
| | | | |
| 996+484 | 160 | 011111100, 011110011, 011001111, 000111111 | 160, 320 |
| | 320 | 111100000, 111010000, 110110000, 101110000, 100001110, 100001101, 100001011, 100000111 | |
| 996+484+242 | 160 | 011101111,011011111,010111111,001111111, 011111110,011111101,011111011,011110111 | |
| 2×996 | 160 | 011111111 | |
| | 320 | 111110000, 100001111 | |
| 2×996+484 | 320 | 111111000, 111110100, 111101100, 111011100, 110111100, 101111100, 100111110, 100111101, 100111011, 100110111, 100101111, 100011111 | 320 |
| 3×996 | 320 | 111111100, 111110011, 111001111, 100111111 | |
| 3×996+484 | 320 | 111111110, 111111101, 111111011, 111110111, 111101111, 111011111, 110111111, 101111111 | |
| 4×996 | 320 | 111111111 | |

For TB sounding, a feedback type and Ng subfield and a codebook size subfield may be set according to an example as shown in Table 3.

**[Table 3]**

| **Feedback Type And Ng** | | **Codebook Size** | **Description** |
|---|---|---|---|
| **B25** | **B26** | **B28** | |
| 0 | 0 | 0 | SU, *Ng* = 4, quantization resolution (ϕ, ψ ) = {4, 2} |
| 0 | 0 | 1 | SU, *Ng* = 4, quantization resolution (ϕ, ψ ) = {6, 4} |
| 0 | 1 | 0 | SU, *Ng* = 16, quantization resolution (ϕ, ψ ) - {4, 2} |
| 0 | 1 | 1 | SU, *Ng* = 16, quantization resolution (φ, ψ ) = {6, 4} |
| 1 | 0 | 0 | MU, *Ng* = 4, quantization resolution (φ, ψ ) = {7, 5} |
| 1 | 0 | 1 | MU, *Ng =* 4, quantization resolution (ϕ, ψ ) = {9, 7} |
| 1 | 1 | 0 | CQI |
| 1 | 1 | 1 | MU, *Ng* = 16, quantization resolution (φ, ψ ) = {9, 7} |

For non-TB sounding, a feedback type and Ng subfield and a codebook size subfield may be set according to an example as shown in Table 4.

**[Table 4]**

| **Feedback Type And Ng** | | **Codebook Size** | **Description** |
|---|---|---|---|
| **B25** | **B26** | **B28** | |
| 0 | Reserved | Reserved | SU |
| 1 | 1 | 0 | CQI |

A disambiguation subfield is set to 1, thereby helping a non-EHT STA (e.g., a VHT STA) not to misunderstand the corresponding field as an AID field.

In an EHT NDP announcement frame, an RA is set to a broadcast address, and the following may apply. When the feedback type and Ng subfield and the codebook size subfield indicate SU or MU, an Nc index subfield is set to a value of Nc-1, Nc corresponds to the number of columns in a compressed beamforming feedback matrix, and a value greater than 7 is reserved in the Nc index subfield. When the feedback type and Ng subfield and the codebook size subfield indicate CQI, the Nc index subfield is set to a value of Nc-1, Nc corresponds to the number of space-time streams (STS), and a value greater than 7 is reserved in the Nc index subfield. One or more STA info fields may be present.

In an EHT NDP announcement frame having a single STA info field, the RA field is set to an individual address, and the Nc index subfield may be reserved.

### Multi-link Operation

Hereinafter, a multi-link operation supported by a STA according to the present disclosure will be described.

A STA (an AP STA and/or a non-AP STA) described in the present disclosure may support multi link (ML) communication. ML communication may refer to communication supporting a plurality of links. A link related to ML communication may include a channel (e.g., 20/40/80/160/240/320MHz channels) in a frequency band in which a STA operates (e.g., a 2.4GHz band, a 5GHz band, a 6GHz band, etc.). A plurality of links used for ML communication may be configured in various ways. For example, a plurality of links supported by one STA for ML communication may belong to the same frequency band or belong to a different frequency band. In addition, each link may correspond to a frequency unit in a predetermined size (e.g., a channel, a subchannel, a RU, etc.). In addition, all or part of a plurality of links may be a frequency unit in the same size or may be a frequency unit in a different size.

When one STA supports a plurality of links, a transmitting or receiving device supporting each link may operate like one logical STA. In other words, a MLD (multi-link device) refers to a device which has at least one affiliated STA as a logical entity and has a single MAC service access point (SAP) for one MAC data service and logical link control (LLC). A non-AP MLD refers to a MLD that each STA affiliated with a corresponding MLD is a non-AP STA. A multi-radio non-AP MLD refers to a non-AP MLD that supports reception or exchange of a frame in at least one link at a time. An AP MLD refers to a MLD that each STA affiliated with a corresponding MLD is an AP STA.

A multi-link operation (MLO) may enable a non-AP MLD to discover, authenticate and associate an AP MLD and set up a plurality of links. Based on a supported capability exchanged during an association procedure, each link may enable channel access and frame exchange between a non-AP MLD and an AP MLD. A STA affiliated with a MLD may select and manage its capability and operation parameter independently from other STA(s) affiliated with the same MLD.

Through a multi-link setup process, an AP MLD and/or a non-AP MLD may transmit or receive link-related information which may be supported by a corresponding MLD. Link-related information may include at least one of whether it is a simultaneous transmit and receive (STR) operation capable of simultaneous transmission or reception on a plurality of links or a non-simultaneous transmit and receive (NSTR) operation incapable of simultaneous transmission or reception, information on the number/upper limit of UL/DL links, information on a location/a band/a resource of an UL/DL link, information on a frame type (e.g., management, control, data) available or preferred in at least one UL/DL link, information on an ACK policy available or preferred in at least one UL/DL link or information on a traffic identifier (TID) available in at least one UL/DL link supported by a corresponding MLD.

An AP MLD (e.g., a NSTR mobile AP MLD) may configure one link among a plurality of links as a primary link. An AP MLD may perform a beacon frame, a probe response frame and a group addressed data frame only on a primary link. The remaining other link(s) of a plurality of links may be referred to as a non-primary link. An AP MLD operating on a non-primary link may operate not to transmit a beacon frame or a probe response frame. In addition, a non-AP MLD may perform frame exchange during authentication, (re)association and 4-way handshaking only on a primary link.

When at least one traffic identifier (TID) is mapped to a corresponding link through a multi-link setup process, a setup link may be defined as being enabled and when there is no TID mapped to a corresponding link, a setup link may be defined as being disabled. A TID should be always mapped to at least one setup link unless admission control is used. Basically, a TID is mapped to all setup links, so all setup links may be activated.

When a link is activated, a corresponding link may be used for frame exchange according to a power state of a non-AP STA operating in a corresponding link. Only a MSDU or an A-MSDU with a TID mapped to an active link may be transmitted in a corresponding link. A management frame and a control frame may be transmitted only in an active link.

When a link is deactivated, a corresponding link may not be used for frame exchange by including a management frame for both a DL and an UL.

In a multi-link setup process, activation/deactivation of each link may be indicated through TID-to-Link mapping. TID-to-Link mapping may be performed in a default mapping mode or/and a negotiation mapping mode.

One STA among STAs belonging to a MLD may provide information on at least one link other than its link for multi-link discovery (e.g., obtain information on a plurality of links including a corresponding link on one link) or multi-link setup (e.g., simultaneous association on a plurality of links through exchange between an association request/response frame on one link). To provide this information, a multi-link (ML) element may be defined.

### Multi-AP operation

The multi-AP operation to which the method proposed in this disclosure can be applied is described.

Multi-AP operation refers to a general term for a technique in which multiple APs/STAs cooperate with each other to transmit and receive data when communicating with STA(s), and for example, the following techniques can be used.
- Type 1: Co-transmission of multi-APs/STAs: This transmission technique refers to a technique in which multiple APs simultaneously transmit to STA(s). Co-transmission can be classified in detail as follows.
   i) Co-transmission of multi-APs/STAs to each STA (e.g., co-spatial reuse (C-SR)): APs/STAs can share channel information (e.g., transmit power (Tx Power), received signal strength indicator (RSSI), etc.) with STA(s), and can perform communication between each AP and STA at the same time based on the shared channel information.
   ii) Joint-transmission of multi-APs/STAs to the same STA(s) (e.g., joint transmission (J-TX))

Multiple APs/STAs can share channel information and data with STA(s), and can perform communication between multiple APs and STA(s) at the same time based on the shared channel information and data.
- Type 2: Multi-APs/STAs coordination: Among multiple APs, an appropriate AP can divide the appropriate area (i.e., frequency/time/space area) and transmit to appropriate STA(s).
   i) Distinction by frequency domain (e.g., coordinated OFDMA (C-OFDMA)): APs/STAs share channel information according to frequency bands with STA(s), and based on the shared channel information, each AP selects an appropriate frequency band to perform communication between each AP and STA.
   ii) Distinction by spatial domain (e.g., coordinated beamforming (C-BF)): APs/STAs share channel information with STA(s), and based on the shared channel information, a beamforming (BF) matrix suitable for communication of each AP or that does not interfere with other APs is calculated to perform communication between each AP and STA.
   iii) Distinction by time domain (e.g., AP selection, relay, virtual BSS (V-BSS)): The representative AP selects APs/STAs suitable for the STA(s) (including the representative AP) and controls communication between the AP/STA and the STA.

In order to support the above multi-AP operation, the representative AP can select and indicate an AP/STA (hereinafter referred to as a participating AP/STA) for communication with the STA. Here, the meanings of the representative AP and the participating AP/STA are as follows.
i) Representative AP (also referred to as master AP, sharing AP)
   - The representative AP initiates and controls multi-AP operation, a technology for transmission and reception by multiple APs.
   - The representative AP groups participating APs and manages links with participating APs so that information (e.g., information about channels and/or data) can be shared among participating APs.
   - The representative AP manages the information of the BSS composed of the participating APs and the information of the STAs associated with the BSS.
ii) Participating AP (also referred to as slave AP or shared AP)
   - The participating AP is associated with the representative AP and can share control information, management information, and data traffic with each other.
   - Participating AP basically performs the same function as an AP that can establish a BSS in a conventional WLAN system.
iii) Participating STA
   - Like in a conventional WLAN, it forms a BSS by associating with a representative AP or a participating AP.

In addition, the multi-AP operating environment is as follows.

The representative AP and the participating AP may be capable of direct transmission and reception of wired or wireless (e.g., control information and/or data) with each other. In addition, the representative AP and the STA may not be capable of direct transmission and reception of wireless signals (e.g., control information and/or data) with each other. In addition, the participating AP (i.e., associated with the STA) and the STA may be capable of direct transmission and reception of wireless signals (e.g., control information and/or data) with each other. In addition, one of the participating APs may become the representative AP.

In addition, a DL or UL procedure for multi-AP operation may be roughly performed as follows:
1. The representative AP indicates the participating AP(s) (e.g., initiation of multi-AP operation, scheduling information, etc.).
   Here, after receiving an acknowledgment (Ack) from participating APs in response to the representative AP's indication (e.g., initiation of multi-AP operation, scheduling information, etc.), the representative AP can indicate Multi-AP operation by re-scheduling only for the APs that transmitted the Ack.
2. The participating AP(s) transmit DL data transmission or DL trigger (i.e., trigger for UL data transmission of STA) to the STA(s).
3. The receiving STA(s) transmits an Ack transmission (i.e., when DL data is received) or UL data (i.e., when a trigger for UL data transmission is received) to the participating AP(s).
   Here, in the case of a UL procedure (i.e., when the STA transmits UL data to the participating AP(s), the participating AP(s) may transmit an Ack to the STA(s) if necessary.
4. The participating AP(s) may report the result (or completion of multi-AP operation) to the representative AP.

Hereinafter, in the description of the present disclosure, for the convenience of explanation, the AP transmitting the trigger frame in step 1 is referred to as a representative AP, but is not limited thereto, and may be referred to as a master AP, a sharing AP, a primary AP, etc. In addition, the AP receiving the trigger frame in step 1 is referred to as a participating AP, but is not limited thereto, and may be referred to as a slave AP, a shared AP, a secondary AP, etc.

The present disclosure proposes a method for step 1 of the above-described procedure, that is, a method for a representative AP to trigger (indication for initiation) a multi-AP operation.

In relation to step 1, the method for a representative AP to indicate a multi-AP operation (i.e., a method for triggering a multi-AP operation) may be as follows.

### 1) Direct transmission indication (or short-term indication)

According to this method, the representative AP can directly indicate the participating AP(s) to transmit. In other words, it can mean a method in which the representative AP dynamically indicates the participating AP(s) whenever the multi-AP operation starts.

The frame that triggers the multi-AP operation can be referred to as a multi-AP downlink trigger frame (MAD trigger frame), but the present disclosure is not limited thereto.

The MAD trigger frame can reuse the existing basic trigger frame structure. Alternatively, the MAD trigger frame can be configured as a new type of trigger frame. In this case, for example, the new type of MAD trigger frame can be indicated in the trigger type subfield. Alternatively, the MAD trigger frame can be defined as a new control frame.

The existing trigger frame is transmitted for the purpose of triggering UL TB PPDU transmission of a non-AP STA, but the MAD trigger frame is transmitted for the purpose of triggering DL PPDU transmission of a participating AP participating in a multi-AP operation, so their purposes are different.

### 1) Transmission interval indication (or mid-term indication)

The representative AP can inform the participating AP(s) of the multi-AP operation section. For example, the MU-RTS TXS trigger frame (i.e., the trigger frame that triggers the TXOP sharing procedure described above) can be used.

The existing MU-RTS TXS trigger frame notifies the TXOP duration with the AP or another STA associated with the scheduled STA as the value of the triggered TXOP sharing mode subfield is set to 1 or 2. As an example of a method of applying the MU-RTS TXS trigger frame to the multi-AP operation in the present disclosure, the values of 1 or 2 of the triggered TXOP sharing mode subfield may be used identically. As another example, the reserved value 3 of the triggered TXOP sharing mode subfield may be used to separately define a TXOP allocation method for the multi-AP procedure. In addition, in order to support such a multi-AP operation, unlike the existing MU-RTS TXS trigger frame, it may be allowed to include one or more User Info fields.

### NDPA frame format for OBSS NDP sounding procedure

In the current standard, an NDP sounding procedure refers to a procedure in which a BSS AP (hereinafter, referred to as AP1) transmits a sounding NDP to STAs associated with the corresponding AP or STAs belonging to the corresponding BSS (hereinafter, referred to as STA1), and receives feedback of information obtained by measuring and calculating channel information from the STA1.

If a multi-AP technique is introduced, APs/STAs within a BSS may need channel information with APs/STAs of another adjacent unassociated BSS (hereinafter, referred to as OBSS) other than the BSS AP (hereinafter, they are refered as AP2/STA2, respectively). The present disclosure proposes a method for acquiring channel information using an NDP sounding procedure. However, since the AP and the STA may not belong to the same BSS in the present disclosure, even if a conventional NDP sounding procedure is used, a transmission and reception method and the like according to it may be different. In the present disclosure, such a channel measurement technique is collectively referred to as OBSS NDP sounding, and an OBSS NDP sounding procedure/configuration is proposed. In particular, an announcement method for indicating the NDP sounding is proposed.

In the present disclosure, the BSS and the OBSS are adjacent to each other, AP1 (the AP of the BSS) and AP2 (the AP of the OBSS) can listen each other's signals (or a device for transferring each other's signals may exist between AP1 and AP2), STA1 (the STA of the BSS) can listen not only the signal of AP1 but also the signal of AP2, and STA2 (the STA of the OBSS) can listen not only the signal of AP2 but also the signal of AP1. (Some STA1s and STA2s may not be able to listen. Such STA1s and STA2s are hereinafter referred to as STA1' and STA2') In addition, AP1, AP2, STA1, and STA2 have capability for a multi-AP operation, and can perform the multi-AP operation according to circumstances or according to instructions. AP1 and AP2 may become a sharing AP or a shared AP according to circumstances, and as an example, an AP that has acquired a TXOP may correspond to the sharing AP. Alternatively, a third AP may perform a role of the sharing AP.

In the present disclosure, for convenience of explanation, a method in which the OBSS NDP sounding procedure is applied to a BSS AP/STA and an OBSS AP/STA is mainly described, but the present disclosure is not limited thereto. That is, the OBSS NDP sounding procedure of the present disclosure may also be extended and applied for channel measurement of an AP/STA(s) for each link or a relay AP/STA(s) of an MLD, and in this case, the proposed method of the present disclosure may be referred to as an NDP sounding procedure for an adjacent/another link. For example, when the proposed method of the present disclosure is applied to an MLD device, for example, in the description of the present disclosure, AP1 and AP2 may be included within a single MLD, and STA 1 and STA 2 may be included within a single MLD.

Transmission and reception frames required for the OBSS NDP sounding procedure may be as follows. In addition, a trigger frame, a block ack (BA) frame, and the like may be further required.
- An NDP announcement frame indicating OBSS sounding (hereinafter, for convenience of explanation, it may be referred to as an ONDPA (OBSS NDP announcement) frame)
- A sounding NDP

A feedback frame (e.g., a compressed beamforming/channel quality indication (CQI) report frame)

Operations of an AP and an STA for the OBSS sounding procedure of AP 1 (i.e., a method for acquiring channel information from STA 2 of AP 1) are exemplified as follows. This procedure may be equally applied to the OBSS sounding procedure of AP 2 (i.e., a method for acquiring channel information from STA 1 of AP 2).
- Example of operation of AP
   i) AP1 or AP2 or the sharing AP transmits the ONDPA frame.
   ii) AP1 transmits a (sounding) NDP after xIFS (e.g., SIFS).
   iii) When a specific condition is satisfy (e.g., when requesting feedback from one or more STAs or when an RA field is broadcast), after xIFS (e.g., SIFS), AP1 or AP2 or the sharing AP may transmit a beamforming report poll (BFRP) trigger frame.
   iv) After xIFS (e.g., SIFS), AP1 may receive the feedback frame transmitted by the STA2(s) to acquire OBSS channel information. Alternatively, AP2 or the sharing AP may receive the feedback frame transmitted by the STA2(s) and then transfer the acquired OBSS channel information to AP1 (or to the sharing AP).
   v) AP1, AP2, or the sharing AP may collect such channel information to perform the multi-AP operation.
- Example of operation of STA2
   i) The STA2(s) receives the ONDPA frame from AP1 or AP2 or the sharing AP.
   ii) If the received ONDPA frame includes information requesting feedback from STA2 (e.g., an AID or an OBSS AID (OAID) of STA2 is included), the STA 2(s) receives the (sounding) NDP transmitted after xIFS (e.g., SIFS) to generate channel information as indicatted. If it is not the ONDPA frame requesting feedback from itself, the STA 2(s) may perform NAV setting.
   iii) When a specific condition is met (e.g., when the RA field of the ONDPA frame is broadcast), the STA 2(s) receives the BFRP trigger frame transmitted by AP1 or AP2 or the sharing AP after xIFS (e.g., SIFS) to figure out resource information and the like to be fed back.
   iv) After xIFS (e.g., SIFS), the STA2(s) may transmit the generated channel information to AP1 or AP2 or the sharing AP through the feedback frame.

Among the above procedures/frames, in particular, the present disclosure proposes a configuration/format of an NDP announcement frame indicating OBSS sounding as follows. For example, the ONDPA frame may be different in configuration/format from a conventional NDP announcement frame in that an AP instructs OBSS STA(s) not associated with itself, or the configuration/format of the conventional NDP announcement frame may be identically used.

### Embodiment 1: NDPA frame configuration for indicating OBSS sounding

A new format as follows may be configured/defined for an NDPA frame for indicating OBSS sounding.

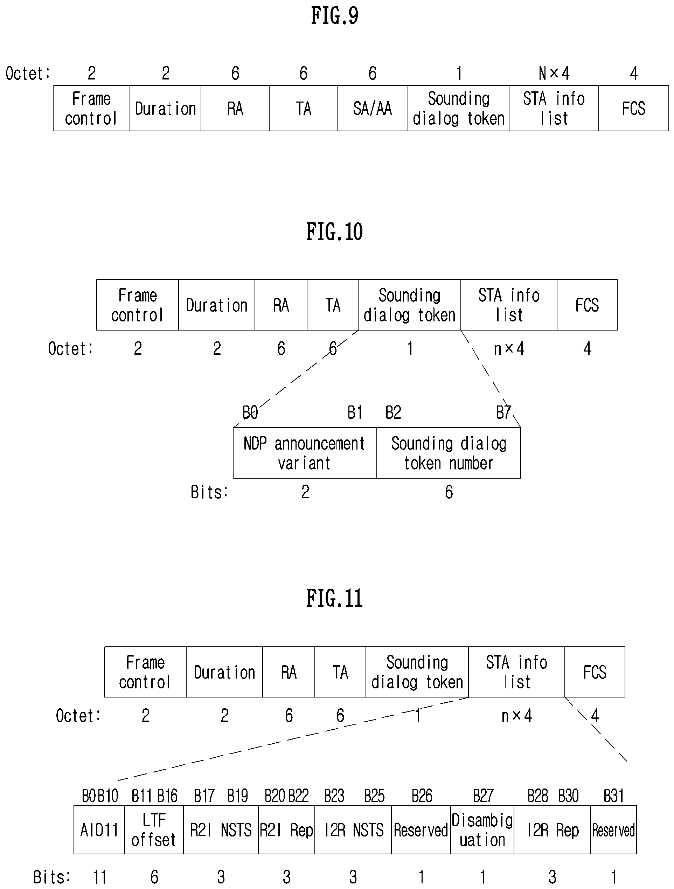

FIG. 9 illustrates an NDPA frame for indicating OBSS sounding according to one embodiment of the present disclosure.

Referring to FIG. 9, an NDPA frame for indicating OBSS sounding may be configured to include a frame control field, a duration field, a receiver address (RA) field, a transmitter address (TA) field, a source address (SA) or AP address (AA) field, a sounding dialog token field, one or more STA info fields (i.e., an STA info list), and a frame check sequence (FCS).

Type=01 (i.e., indicating a control frame) and subtype=0101 (i.e., indicating an NDPA frame) of the frame control field may be set. That is, it may be set to the same value as a conventional NDPA frame.

Both a ToDS subfield and a FromDS subfield within the frame control field may be set to 1. In case of the conventional NDPA frame, both the ToDS subfield and the FromDS subfield within the frame control field were set to 0, but they may be both set to 1 in the NDPA frame for indicating OBSS sounding.

The source address (SA) or AP address (AA) field may be configured as follows. When i) the ToDS subfield is set to '1', or ii) the FromDS subfield is set to '1', or iii) both the ToDS subfield and the FromDS subfield are set to '1', a third address (Address 3) field may be included in the NDPA frame for indicating OBSS sounding, and this may be defined as the SA field or the AA field. This field may separately indicate a MAC address of an AP of a BSS in which a receiving STA is included/belongs.

For example, the SA field may be set by including the above-described definition in the conventional meaning of SA (source address) as follows.
- SA field: indicates an individual address identifying a MAC entity where transmission of a MAC service data unit (MSDU) (or a fragment of the MSDU) or an aggregated MSDU (A-MSDU) included in a frame body field was initiated. Alternatively, it indicates an address of an AP with which intended direct recipient STA(s) is associated.

As another example, a new AA (AP address) field may be defined as follows.
- AA field: indicates an address of an AP with which intended direct recipient STA(s) is associated.

Here, in a control frame for supporting a multi-AP operation as well as the ONDPA frame, a case may occur where an AP supporting the multi-AP operation together, rather than a BSS AP, transmits the control frame. Accordingly, in the control frame for supporting the multi-AP operation, unlike the conventional case, the ToDS subfield is set to '1', or the FromDS subfield is set to '1', or both subfields are set to '1', so that the third address (Address 3) field may be configured to be included within the control frame.

Last 6 bits (B2~B7) of the sounding dialog token field may be set as a sounding dialog token number subfield, and first 2 bits (B0~B1) may be defined as reserved. Alternatively, a value of '00' in B0~B1 may be set to indicate the ONDPA frame, and other values may be defined as reserved. Alternatively, B0~B1 values may indicate a type of the ONDPA frame. Alternatively, like the conventional NDPA frame, among 8 bits (B0-B7) of the sounding dialog token field, first 2 bits (B0 and B1) may be used to indicate a type/variant of the NDP announcement frame.

The format of the field defined in the conventional EHT NDPA frame may be identically used for the STA info field(s) included within the STA info list (i.e., see FIG. 8(d)). The AID11 subfield may include an AID value of an STA that needs to measure an NDP and provide feedback. Here, as the AID, an AID value defined within a BSS may be used in the ONDPA frame of an OBSS AP, or it may be an OBSS AID (OAID) value newly defined for use by the OBSS AP.

Fields/subfields not specifically described here may follow a format/configuration of a conventional control frame or NDPA frame.

Meanwhile, type=01 (i.e., indicating a control frame) and subtype=0110 (i.e., indicating a control frame extension) of the frame control field of the NDPA frame for indicating OBSS sounding may be set. In addition, as a control frame extension subfield, one value among values from 1100 to 1111, which were previously reserved, may be defined so that the NDPA frame for indicating OBSS sounding can be configured as a new control frame. Configurations of other fields are the same as those described above, and thus a detailed description thereof will be omitted.

### Embodiment 2: NDPA frame configuration for indicating OBSS sounding

An NDPA frame for indicating OBSS sounding may be configured/defined by identically using the format and structure of the conventional NDPA frame.

FIG. 10 illustrates an NDPA frame for indicating OBSS sounding according to one embodiment of the present disclosure.

Referring to FIG. 10, an NDPA frame for indicating OBSS sounding may be configured to include a frame control field, a duration field, a receiver address (RA) field, a transmitter address (TA) field, a sounding dialog token field, one or more STA info fields (i.e., an STA info list), and a frame check sequence (FCS).

Type=01 (i.e., indicating a control frame) and subtype=0101 (i.e., indicating an NDPA frame) of the frame control field may be set. In addition, both a ToDS subfield and a FromDS subfield may be set to '0'. That is, it may be set to the same value as a conventional NDPA frame.
- RA field

When the NDPA frame for indicating OBSS sounding requests OBSS sounding from one STA, the RA field may be set to an address of the corresponding STA. Alternatively, when requesting OBSS sounding from two or more STAs, the RA field may be set to a broadcast address.

Alternatively, to notify that the frame is an NDPA frame for indicating OBSS sounding, the RA field may be set to a specific address value (e.g., designating a group address such as a multicast-group address or a broadcast address). In this case, STAs having an OBSS sounding capability (or a capability for a multi-AP operation) can confirm that the corresponding frame is the NDPA frame for indicating OBSS sounding through the specific address value, even if a value of the RA field is not their own address, and can check whether an instruction for themselves is included after decoding the corresponding frame.
- TA field

The TA field may be set to an address of an AP/STA transmitting the NDPA frame for indicating OBSS sounding or a bandwidth signaling TA.

Alternatively, to notify that the frame is the NDPA frame for indicating OBSS sounding, the TA field may be set to a specific address value (e.g., designating a group address such as a multicast-group address or a broadcast address). In this case, STAs having the OBSS sounding capability (or the capability for the multi-AP operation) can confirm that the corresponding frame is the NDPA frame for indicating OBSS sounding through the specific address value, even if the value of the TA field is not an AP address of a BSS to which they belong, and can check whether an instruction for themselves is included after decoding the corresponding frame.
- Sounding dialog token field

The sounding dialog token field may be configured to include an NDP announcement variant subfield (first 2 bits) and a sounding dialog token number subfield (last 6 bits).

The conventional NDP announcement variant subfield can identify an NDPA frame variant as shown in Table 5.

**[Table 5]**

| **NDP Announcement Variant subfield** | **NDP Announcement frame variant** |
|---|---|
| 0 | VHT NDP Announcement frame |
| 1 | Ranging NDP Announcement frame |
| 2 | HE NDP Announcement frame |
| 3 | EHT NDP Announcement frame |

Referring to Table 5, according to a conventional scheme, when a value of the NDP announcement variant subfield is set to 0, the frame is identified as a VHT NDPA frame, when the value of the NDP announcement variant subfield is set to 1, the frame is identified as a ranging NDPA frame, when the value of the NDP announcement variant subfield is set to 2, the frame is identified as an HE NDPA frame, and when the value of the NDP announcement variant subfield is set to 3, the frame is identified as an EHT NDPA frame.

Method 1: When the NDP announcement variant subfield = 1, the corresponding frame may be identified as the ranging NDPA frame or an NDPA frame for indicating OBSS sounding. Here, as an example of a method for distinguishing between the ranging NDPA frame and the NDPA frame for indicating OBSS sounding, one bit among reserved bits of an STA info field may be used. That is, if the one bit is '0' (or '1'), the corresponding frame is identified as the ranging NDPA frame, and if it is '1' (or '0'), the corresponding frame may be identified as the NDPA frame for indicating OBSS sounding. In this case, the STA info field may be configured differently depending on whether the corresponding frame is the ranging NDPA frame or the NDPA frame for indicating OBSS sounding. A detailed description thereof will be described later.

Method 2: When the NDP announcement variant subfield = 3, the corresponding frame may be identified as the EHT NDPA frame or the NDPA frame for indicating OBSS sounding. Here, as an example of a method for distinguishing between the EHT NDPA frame and the NDPA frame for indicating OBSS sounding, a specific value (e.g., one value from 2007 to 2047) of an AID11 subfield of a first STA info field (i.e., a subfield carrying 11 least significant bits (LSB) of an association identifier (AID) of an STA) may be used. For example, when the AID11 subfield is set to the specific value, the corresponding frame may be identified as the NDPA frame for indicating OBSS sounding. In this case, the first STA info field may include common information required for the OBSS sounding. A detailed description thereof will be described later.
- STA info field

Configuration 1: When following the Method 1 for the sounding dialog token field described above, a structure/format of the STA info field of the ranging NDPA frame may be used.

FIG. 11 illustrates an STA information field of an NDPA frame for indicating OBSS sounding according to one embodiment of the present disclosure.

Referring to FIG. 11, each STA info field included in the STA info list may be configured to include an AID11 subfield, an LTF offset subfield, an R2I NSTS subfield, an R2I Rep subfield, an I2R NSTS subfield, a reserved bit, a disambiguation subfield, an I2R Rep subfield, and a reserved bit.

An AP may indicate each STA to perform OBSS NDP sounding by using the structure of the STA info field of the ranging NDPA of FIG. 11. For example, when the corresponding frame is an NDPA frame for indicating OBSS sounding, a last bit (B31) of the STA info field may be set to '1'. An STA to which the corresponding STA info field points (i.e., an STA identified by the AID11 subfield in the corresponding STA info field) can read B31 and recognize that the corresponding frame is the NDPA frame for indicating OBSS sounding. However, in this case, since it can be distinguished whether the corresponding frame is a ranging NDPA frame or the NDPA frame for indicating OBSS sounding after checking B31 of each STA info field, it may be a decoding burden to STAs. In this case, as another method, if it is notified in advance that it is the ONDPA frame, the burden can be reduced, and a 'PHY (physical layer) indication' method to be described later may be used.

Other than that, each subfield in the STA info field of the NDPA frame for indicating OBSS sounding illustrated in FIG. 11 may be defined to have the same structure as each subfield in the STA info field of the ranging NDPA frame, and a detailed description thereof will be omitted.

Configuration 2: When an STA info field including a specific AID11 value (e.g., one value from 2007 to 2047) is set as a first STA info, the corresponding frame may be identified as the NDPA frame for indicating OBSS sounding. This may be applied regardless of an NDP announcement variant value according to Table 5.

The STA info field including such a specific AID11 value may include indications and information common to all STAs. In the present disclosure, for convenience of explanation, this may be referred to as a common STA info field.

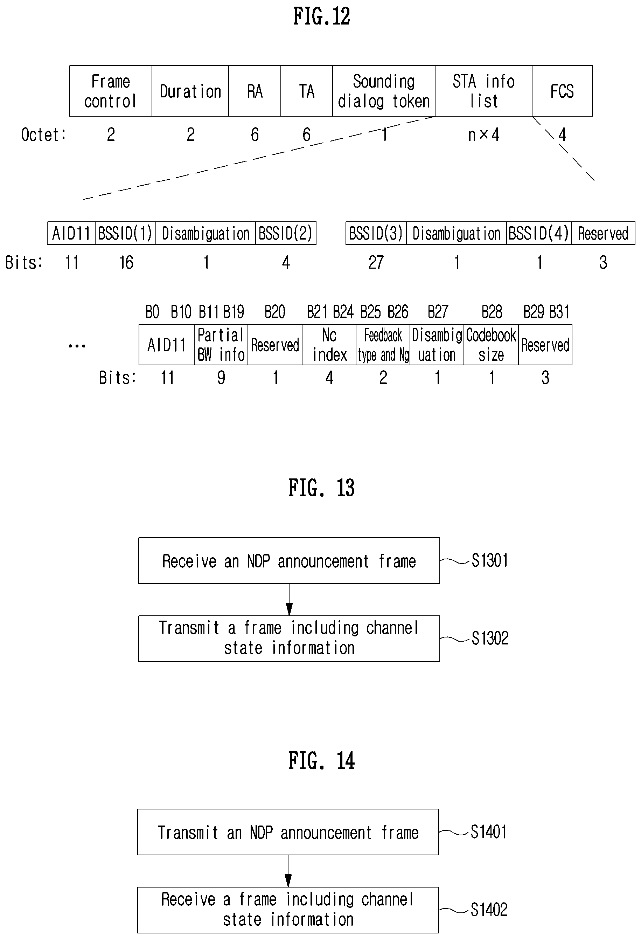

FIG. 12 illustrates an STA information field of an NDPA frame for indicating OBSS sounding according to one embodiment of the present disclosure.

Referring to FIG. 12, first one (or two or more) STA info fields in an STA info list may be configured as a common STA info field including common information. Subsequent STA info field(s) thereafter may include individual STA information.

Although FIG. 12 exemplifies a case where the first two STA info fields configure the common STA field, the present disclosure is not limited thereto. That is, the first one STA info field may be configured as the common STA field.

Here, as an example of the common STA info field, the common STA info field may include the common information by configuring some or all of other subfields differently except for an AID11 subfield and a disambiguation subfield (i.e., identically including them).

Here, as an example of the common information, it may include at least one of a BSSID or a part thereof of an STA or AP transmitting an NDPA frame for indicating OBSS sounding, a BSSID or a part thereof of a BSS AP to which an STA that needs to perform the OBSS sounding belongs, or multi-AP group information. Here, instead of the BSSID, representative information/number of a corresponding AP during a multi-AP operation (e.g., a group ID, a BSS color (i.e., a 6-bit identifier for distinguishing BSSs operating in the same channel)), and the like may be included.

To include the entire BSSID, for example, the common STA info field may be defined to be configured with two or more consecutive STA info fields as shown in FIG. 12. Referring to FIG. 12, one BSSID may be expressed/indicated continuously from BSSID(1) to BSSID(4).

The STA info field(s) after the common STA info field may include indications and information individually required for each STA. As an example of its configuration, as shown in FIG. 12, the configuration/format of the STA info field of a conventional EHT NDPA frame (see FIG. 8(d)) may be identically used.

Meanwhile, for both Configuration 1 and Configuration 2 for the STA info field described above, when transmitting the STA info field individually to each STA, a value included in the AID11 subfield may vary depending on a transmission subject of the NDPA frame for indicating OBSS sounding.

For example, in case of OBSS NDP sounding for knowing channel information between AP1 and STA2, a (sounding) NDP may be transmitted by AP1. Here, an NDPA frame indicating the OBSS NDP sounding may be transmitted by AP2. In this case, a conventional AID may be used for STA2.

Alternatively, in case of the OBSS NDP sounding for knowing channel information between AP1 and STA2, the (sounding) NDP may be transmitted by AP1, and AP1 may also transmit the NDPA frame indicating the OBSS NDP sounding. In this case, the AID of STA2 may be configured differently from the conventional case. That is, since an AID is generally a value defined within a BSS to which an STA belongs, the same value may point to a different STA in another BSS, and thus a method for preventing this is required. An example of the method is as follows.

For example, AIDs may be allocated among BSSs performing a multi-AP operation together such that AIDs of STAs do not overlap. In this case, the ONDPA frame may also include the AID11 subfield in a conventional manner.

As another example, an AID for an OBSS STA may be newly allocated. For example, an AID used when AP1 indicates STA2 or used when AP2 indicates STA1 may be separately defined. In this case, the ONDPA frame may include an OAID in the AID11 subfield.

### 'PHY (physical layer) indication' method

The ONDPA frame may be in a non-HT DUP (duplicated) format or a UHR PPDU format.

Here, for faster recognition of the ONDPA frame in addition to the above-described methods, a PHY signal of the UHR PPDU format may be used. That is, it can be indicated that it is the ONDPA frame by configuring a PPDU format of the ONDPA frame to the UHR PPDU format and configuring a BSS color of a U-SIG to a specific value. Here, the specific value may be defined/set to one fixed value for the multi-AP operation, or the specific value may be allocated as several values, one for each AP group performing the multi-AP operation together. In the former case, one value may be designated, and in the latter case, signaling for allocation may be required before the OBSS sounding.

FIG. 13 is a diagram illustrating the operation of an STA for an NDP sounding method according to one embodiment of the present disclosure.

In FIG. 13, a first AP and a second AP correspond to different APs, and a BSS of the first AP and a BSS of the second AP operate in the same channel and may overlap. In addition, an STA may correspond to an STA belonging to the BSS of the first AP (and/or associated with the first AP).

Referring to FIG. 13, the STA receives an NDP announcement frame from the first AP (S1301).

Here, the NDP announcement frame includes a plurality of STA info fields, and a variant of the NDP announcement frame (e.g., an NDP announcement frame for indicating OBSS sounding) may be identified by first one or more STA info fields among the plurality of STA info fields.

In addition, a first STA info field among the one or more STA info fields includes an AID11 subfield, and based on the AID11 subfield being set to a specific value (e.g., 2047), the variant of the NDP announcement frame (e.g., the NDP announcement frame for indicating OBSS sounding) may be identified.

In addition, the NDP announcement frame further includes a sounding dialog token field, and the sounding dialog token field may include an NDP announcement variant subfield and a sounding dialog token number subfield. Here, even if a value of the NDP announcement variant subfield is set to 3, based on the AID11 subfield being set to the specific value, the NDP announcement frame can be distinguished from an extremely high throughput (EHT) NDP announcement frame. That is, the variant of the NDP announcement frame (e.g., the NDP announcement frame for indicating OBSS sounding) can be identified.

In addition, the one or more STA info fields (e.g., two STA info fields) may include common information for a plurality of STAs related to the NDP announcement frame.

Here, the common information may include a basic service set (BSS) color of the first AP and/or identification information for the second AP that transmits an NDP to the STA (e.g., an AID, a BSSID, etc. of the AP).

In addition, remaining STA info fields following after the one or more STA info fields may include individual information for each STA.

The STA transmits a frame including channel state information to the first AP (S1302).

As described above, the STA belongs within the BSS of the first AP, but the STA may not belong within the BSS of the second AP. Although not illustrated in FIG. 13, the STA may receive an NDP from the second AP. That is, the STA receives the NDPA from the first AP for the BSS to which the STA belongs, but may receive the NDP from the second AP for the BSS to which the STA does not belong. In this case, the channel state information may be generated based on the NDP. Alternatively, although not illustrated in FIG. 13, the STA may receive an NDP from the first AP. In this case, the channel state information may be generated based on the NDP

In addition, although not illustrated in FIG. 13, the STA may receive a BFRP trigger frame from the first AP. In this case, the frame including the channel state information may be transmitted through a resource allocated by the BFRP trigger frame.

A PPDU including/carrying the NDP announcement frame in step S1301 and/or the frame in step S1302 may be configured to comprise a legacy-part, a SIG-part (e.g., U-SIG, UHR-SIG, etc.), an STF-part (e.g., UHR-STF), an LTF-part (e.g., UHR-LTF), and a data-part.

All or a part of all parts (i.e., fields) may be divided into a plurality of sub-parts/subfields. Each field (and its subfield) may be transmitted in a unit of 4us * N (N is an integer). In addition, a guard interval (GI) may be included. A common subcarrier frequency spacing value (delta_f=312.5 kHz / N or 312.5 kHz * N, N=integer) may be applied to all of the fields, or a first delta_f may be applied to a first part (e.g., all of the legacy-part, all/a part of the SIG-part), and a second delta_f (e.g., a value smaller than the first delta_f) may be applied to all/a part of the remaining parts.

Some of the above-described fields may be omitted, and the order of the fields may be changed in various manners. For example, a subfield of the signal-part may be disposed before the STF-part, and remaining subfields of the SIG-part may be disposed after the STF-part.

The above-described legacy-part may include at least one of a conventional non-HT short training field (L-STF), a non-HT long training field (L-LTF), and a non-HT signal field (L-SIG).

The above-described SIG-part (e.g., including a U-SIG field, a UHR-SIG field, etc.) may include various control information for a transmitted PPDU. For example, it may include control information for decoding of the STF-part, the LTF-part, and data.

The above-described STF-part may include an STF sequence.

The above-described LTF-part may include a training field (i.e., an LTF sequence) for channel estimation.

The above-described data-part includes user data, and may include a packet (e.g., an MPDU) for a higher layer.

The method described in the example of FIG. 13 may be performed by the first device 100 of FIG. 1. For example, one or more processors 102 of the first device 100 of FIG. 1 may be configured to receive the NDP announcement frame from the second device 200 (i.e., an AP) through transceiver(s) 106, and transmit the frame including the channel state information to the second device 200 through the transceiver(s) 106. Furthermore, one or more memories 104 of the first device 100 may store instructions that, when executed by the one or more processors 102, perform the method described in the example of FIG. 13 or the above-described examples.

FIG. 14 is a diagram illustrating the operation of an AP for an NDP sounding method according to one embodiment of the present disclosure.

In FIG. 14, a first AP and a second AP correspond to different APs, and a BSS of the first AP and a BSS of the second AP operate in the same channel and may overlap. In addition, an STA may correspond to an STA belonging to the BSS of the first AP (and/or associated with the first AP).

Referring to FIG. 14, the first AP transmits an NDP announcement frame to STA(s) (S1401).

Here, the NDP announcement frame includes a plurality of STA info fields, and a variant of the NDP announcement frame (e.g., an NDP announcement frame for indicating OBSS sounding) may be identified by first one or more STA info fields among the plurality of STA info fields.

In addition, a first STA info field among the one or more STA info fields includes an AID11 subfield, and based on the AID11 subfield being set to a specific value (e.g., 2047), the variant of the NDP announcement frame (e.g., the NDP announcement frame for indicating OBSS sounding) may be identified.

In addition, the NDP announcement frame further includes a sounding dialog token field, and the sounding dialog token field may include an NDP announcement variant subfield and a sounding dialog token number subfield. Here, even if a value of the NDP announcement variant subfield is set to 3, based on the AID11 subfield being set to the specific value, the NDP announcement frame can be distinguished from an extremely high throughput (EHT) NDP announcement frame. That is, the variant of the NDP announcement frame (e.g., the NDP announcement frame for indicating OBSS sounding) can be identified.

In addition, the one or more STA info fields (e.g., two STA info fields) may include common information for a plurality of STAs related to the NDP announcement frame.

Here, the common information may include a basic service set (BSS) color of the first AP and/or identification information for the second AP that transmits an NDP to the STA (e.g., an AID, a BSSID, etc. of the AP).

In addition, remaining STA info fields following after the one or more STA info fields may include individual information for each STA.

The first AP receives a frame including channel state information from the STA(s) (S1402).

As described above, the STA belongs within the BSS of the first AP, but the STA may not belong within the BSS of the second AP. Although not illustrated in FIG. 14, the second AP may transmit an NDP to the STA(s). That is, the STA receives the NDPA from the first AP for the BSS to which the STA belongs, but may receive the NDP from the second AP for the BSS to which the STA does not belong. In this case, the channel state information may be generated based on the NDP. Alternatively, although not illustrated in FIG. 14, the first AP may transmit an NDP to the STA(s). In this case, the channel state information may be generated based on the NDP.

In addition, although not illustrated in FIG. 14, the first AP may transmit a BFRP trigger frame to the STA. In this case, the frame including the channel state information may be transmitted through a resource allocated by the BFRP trigger frame.

A PPDU including/carrying the NDP announcement frame in step S1401 and/or the frame in step S1402 may be configured to comprise a legacy-part, a SIG-part (e.g., U-SIG, UHR-SIG, etc.), an STF-part (e.g., UHR-STF), an LTF-part (e.g., UHR-LTF), and a data-part.

All or a part of all parts (i.e., fields) may be divided into a plurality of sub-parts/subfields. Each field (and its subfield) may be transmitted in a unit of 4us * N (N is an integer). In addition, a guard interval (GI) may be included. A common subcarrier frequency spacing value (delta_f=312.5 kHz / N or 312.5 kHz * N, N=integer) may be applied to all of the fields, or a first delta_f may be applied to a first part (e.g., all of the legacy-part, all/a part of the SIG-part), and a second delta_f (e.g., a value smaller than the first delta_f) may be applied to all/a part of the remaining parts.

Some of the above-described fields may be omitted, and the order of the fields may be changed in various manners. For example, a subfield of the signal-part may be disposed before the STF-part, and remaining subfields of the SIG-part may be disposed after the STF-part.

The above-described legacy-part may include at least one of a conventional non-HT short training field (L-STF), a non-HT long training field (L-LTF), and a non-HT signal field (L-SIG).

The above-described SIG-part (e.g., including a U-SIG field, a UHR-SIG field, etc.) may include various control information for a transmitted PPDU. For example, it may include control information for decoding of the STF-part, the LTF-part, and data.

The above-described STF-part may include an STF sequence.

The above-described LTF-part may include a training field (i.e., an LTF sequence) for channel estimation.

The above-described data-part includes user data, and may include a packet (e.g., an MPDU) for a higher layer.

The method described in the example of FIG. 14 may be performed by the second device 200 of FIG. 1. For example, one or more processors 202 of the second device 200 of FIG. 1 may be configured to transmit the NDP announcement frame through transceiver(s) 206, and receive the frame including the channel state information from the first device 100 through the transceiver(s) 206. Furthermore, one or more memories 204 of the second device 200 may store instructions that, when executed by the one or more processors 202, perform the method described in the example of FIG. 14 or the examples described later.

Unlike a conventional NDP sounding method in a wireless LAN system, the NDP sounding method according to the examples of the present disclosure has a feature of supporting the OBSS sounding as described above. Accordingly, since channel information for an OBSS STA can be acquired, a multi-AP operation can be smoothly performed. In addition, as recycling of frequency resources according to a spatial reuse technique in which a plurality of BSSs cooperate becomes possible, an effect that frequency resources can be efficiently used can be achieved.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Availability]

A method proposed by the present disclosure is mainly described based on an example applied to an IEEE 802.11-based system, 5G system, but may be applied to various WLAN or wireless communication systems other than the IEEE 802.11-based system.

## Claims

1. A method, comprising:
receiving, by a station (STA), a null data physical protocol data unit (PPDU) (NDP) announcement frame from a first access point (AP); and
transmitting, by the STA, a frame including channel state information to the first AP,
wherein the NDP announcement frame includes a plurality of STA Info fields, and
wherein a variant of the NDP announcement frame is identified by first one or more STA Info fields among the plurality of STA Info fields.

2. The method of claim 1, wherein a first STA Info field among the one or more STA Info fields includes an AID11 subfield, and
wherein the variant of the NDP announcement frame is identified based on the AID11 subfield being set to a specific value.

3. The method of claim 2, wherein the NDP announcement frame further includes a sounding dialog token field,
wherein the sounding dialog token field includes an NDP announcement variant subfield and a sounding dialog token number subfield, and
wherein, even if a value of the NDP announcement variant subfield is set to 3, the NDP announcement frame is distinguished from an extremely high throughput (EHT) NDP announcement frame based on the AID11 subfield being set to the specific value.

4. The method of claim 1, wherein the one or more STA Info fields include common information for a plurality of STAs related to the NDP announcement frame.

5. The method of claim 4, wherein the common information includes a basic service set (BSS) color of the first AP and/or identification information for a second AP that transmits an NDP to the STA.

6. The method of claim 4, wherein remaining STA Info fields following after the one or more STA Info fields include individual information for each STA.

7. The method of claim 1, further comprising:
receiving, by the STA, an NDP from a second AP,
wherein the STA belongs within a BSS of the first AP but the STA does not belong within a BSS of the second AP, and
wherein the channel state information is generated based on the NDP.

8. The method of claim 1, further comprising:
receiving, by the STA, an NDP from the first AP,
wherein the STA belongs within a BSS of the first AP but the STA does not belong within a BSS of the second AP, and
wherein the channel state information is generated based on the NDP.

9. The method of claim 1, further comprising:
receiving, by the STA, a beamforming report poll (BFRP) trigger frame from the first AP,
wherein the frame including the channel state information is transmitted through a resource allocated by the BFRP trigger frame.

10. The method of claim 1, wherein the STA is an STA belonging to a basic service set (BSS) of the first AP.

11. A station (STA) device in a wireless local area network (WLAN) system, the device comprising:
at least one transceiver; and
at least one processor connected to the at least one transceiver,
wherein the at least one processor is configured to:
receive a null data physical protocol data unit (PPDU) (NDP) announcement frame from a first access point (AP); and
transmit a frame including channel state information to the first AP,
wherein the NDP announcement frame includes a plurality of STA Info fields, and
wherein a variant of the NDP announcement frame is identified by first one or more STA Info fields among the plurality of STA Info fields.

12. A method, comprising:
transmitting, by a first access point (AP), a null data physical protocol data unit (PPDU) (NDP) announcement frame to a station (STA); and
receiving, by the first AP, a frame including channel state information from the STA,
wherein the NDP announcement frame includes a plurality of STA Info fields, and
wherein a variant of the NDP announcement frame is identified by first one or more STA Info fields among the plurality of STA Info fields.

13. A first access point (AP) device in a wireless local area network (WLAN) system, the device comprising:
at least one transceiver; and
at least one processor connected to the at least one transceiver,
wherein the at least one processor is configured to:
transmit a null data physical protocol data unit (PPDU) (NDP) announcement frame to a station (STA); and
receive a frame including channel state information from the STA,
wherein the NDP announcement frame includes a plurality of STA Info fields, and
wherein a variant of the NDP announcement frame is identified by first one or more STA Info fields among the plurality of STA Info fields.

14. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to any one claim of claim 1 to claim 10.

15. At least one non-transitory computer-readable medium storing at least one instruction, wherein:
the at least one instruction controls a device to perform a method according to any one claim of claim 1 to claim 10 in a wireless local area network (WLAN) system by being executed by at least one processor.
